# EUROPEAN PATENT APPLICATION

(11) **EP 2 316 316 A1**
(43) Date of publication of application: **04.05.2011**
(21) Application number: 10189695.9
(22) Date of filing: 02.11.2010
(51) Int. Cl.: A47J 37/12

(54) **Guard for a deep fryer and deep fryer provided with such a guard**

(30) Priority: 02.11.2009 NL 2003740
(71) Applicant: Princess Household Appliances B.V., 4818 PA Breda (NL)
(72) Inventor: Van Loon, Gerardus, Adrianus, 4661 HX, Halsteren (NL)
(74) Representative: Eveleens Maarse, Pieter

(57) **Abstract**

The invention relates to a guard which is adapted for placing in a deep fryer provided with a fryer vessel and a heating element arranged therein, wherein the guard is adapted to be placed extending substantially horizontally under the heating element in the fryer vessel, and the guard extends at least over the surface of the heating element, wherein the guard comprises a substantially flat plate provided with perforations. The guard is suitable for use in deep fryers with a cold zone for the purpose of preventing water accumulated in the cold zone suddenly beginning to boil and evaporate at a high temperature, which results in the sudden formation of vapour bubbles and the resulting splashing of oil and water. Such a plate is naturally stronger than gauze, so that it is sufficiently strong to be applied on its own. The invention also relates to a deep fryer provided with such a guard.

## Description

More and more use is being made in recent times of deep fryers provided with a so-called cold zone. This cold zone is formed by the part of the fryer vessel located under the heating element. Because such a cold zone lies below the heating element, the temperature of the frying oil in the cold zone is lower than that of the oil in other parts of the fryer vessel. Crumbs occurring during frying sink to this cold zone as a result of their density. The low temperature in this cold zone prevents these crumbs burning and tainting the frying oil and causing a rapid reduction in the quality of the frying oil. Because of these advantages such cold zones now find application in many deep fryers.

The use of deep fryers with such a cold zone does however also involve drawbacks; most products heated in a deep fryer comprise water, either naturally, as in the case of potatoes, or because they are deep freeze products to which ice particles adhere. Water can also enter the frying oil through condensed water dripping from the cover. To the extent that this water does not evaporate, it will as a result of its greater density accumulate in the cold zone of the deep fryer. If the cold zone remains sufficiently cool and the water particles remain sufficiently finely distributed, this does not represent a problem, but when the temperature of the cold zone increases, for instance as a result of heat conduction from the wall of the fryer vessel, and the water particles accumulate to form larger units, there is the possible danger at such a high temperature of these larger water particles suddenly beginning to boil and evaporate, this resulting in the sudden formation of vapour bubbles and the resulting splashing of oil and water. It will be apparent that this can cause serious injury to persons in the vicinity of the deep fryer.

In order to avoid the drawbacks, a guard is known from the Belgian patent BE-A-1 013 656 which is adapted for placing in a deep fryer provided with a fryer vessel and a heating element arranged therein, wherein the guard is adapted to be placed extending substantially horizontally under the heating element in the fryer vessel, and the guard extends at least over the horizontal surface of the heating element.

The guard known from this document is formed by a gauze. Applying this guard results in a reduced danger of oil or water splashes because the exploding bubbles are separated by the gauze and only small bubbles can pass through the mesh of the guard. Because of its embodiment in gauze, the guard known from this document is very vulnerable without further auxiliary means. It is of course possible to arrange the gauze in a frame which is placed in the fryer vessel, which reduces the vulnerability to some extent, although this results in a considerable increase in cost price.

The invention has for its object to provide such a guard which can be manufactured at a lower cost price and which is sufficiently strong and durable.

This object is achieved with a guard of the above stated type comprising a substantially flat plate provided with perforations. Such a plate is naturally much stronger than a gauze, so that it is more than sufficiently strong to be applied on its own without further measures which increase the cost price. It is noted that the plate is preferably flat en that it is not distorted.

The present invention therefore relates to a deep fryer provided with a fryer vessel and a heating element placed in the fryer vessel, provided with a guard extending substantially horizontally under the heating element in the fryer vessel, wherein the guard extends at least over the horizontal surface of the heating element, wherein the guard comprises a substantially flat plate provided with perforations.

To avoid sharp edges, which may promote the forming of bubbles and hence emphasize the effect the present invention aims to avoid, the perforations have preferably a cross section with rounded corners, more preferably a round cross section.

In order to allow the action of the plate to be effective over the whole surface of the plate, it is recommended that the perforations are distributed over substantially the whole surface of the plate. Further is it advantageous when the ratio between the surface area of the perforations at their upper faces and the surface area of the plate is less than 0.5.

The perforations preferably have on their upper side a cross section with a larger surface area than that of the cross section at their underside. A funnel shape is hereby obtained with which transport of water particles to below the guard is facilitated, while gas bubbles resulting from sudden bubble formation of water are held under the guard.

In order to keep the production of the guards as simple as possible, it is recommended that the perforations take the form of a truncated cone.

In some cases the design of the fryer vessels will be such that the guard can rest on edges of the fryer vessel. In order to enable easy application in the case of fryer vessels with a flat or substantially flat bottom, it is attractive that the guard be provided with downward extending carriers which are adapted to rest on the bottom of the fryer vessel.

The manufacture of such carriers is simplified when the guard is provided on at least two sides with bent parts functioning as carriers.

The effectiveness of the guard is further improved when the guard is provided with bent strips on all edges. These strips then also function as closure of the space below the guard so that created bubbles can no longer escape through the gap between guard and vessel wall.

According to yet another preferred embodiment, the guard is manufactured from metal such as stainless steel or aluminium. Not only does this increase durability, a thermally conducting surface is moreover arranged in the fryer vessel. This has the result that suddenly occurring temperature differences can be equalized more easily, so that the danger of an increase in the temperature of oil in the cold zone, and the accompanying forming of steam bubbles, is reduced.

Existing deep fryers are usually provided with a heating element connected on one of its sides to the wall. The other distal side then usually rests via a support bracket on the bottom of the fryer vessel. There is a desire to also be able to provide such already existing deep fryers with such a guard. A specific preferred embodiment provides for this purpose the measure that the guard is provided with an opening, the dimensions of which in both directions are at least a factor of 10 greater than the smallest dimensions of the perforations. The support bracket then extends through the opening.

When a deep fryer is supplied complete with a guard according to the invention, it can be attractive for the guard to be provided on its upper side with a bearing element for bearing the distal end of the heating element. This avoids having to place a separate bearing element.

When the guard is applied in new deep fryers before they are supplied, there results a deep fryer provided with a fryer vessel and a heating element placed in the fryer vessel, provided with a guard extending substantially horizontally under the heating element in the fryer vessel, wherein the guard extends at least over the horizontal surface of the heating element, wherein the guard comprises a substantially flat plate provided with perforations.

In new deep fryers use is made of a construction wherein the distal end of the heating element rests on the bottom by means of a bracket. Placing of a guard according to the invention provided with an opening results in a deep fryer provided with a guard provided with an opening, wherein the heating element is connected on one side to the wall of the fryer vessel and on another side rests by means of a support element on the bottom of the fryer vessel and the support element extends through the opening arranged in the guard.

It is however also possible for the deep fryer to be provided with a guard as elucidated above, wherein the heating element is connected on one side to the wall of the fryer vessel and on another side rests on the guard by means of a support element.

It is however also possible for the fryer to be provided with a guard of the above stated type and for the heating element to be connected on one side to the wall of the fryer vessel and on another side to rest on the guard by means of the support element connected to the guard.

The present invention will be elucidated hereinbelow with reference to the accompanying figures, in which:
Figure 1 is a cross-sectional view of a deep fryer provided with a first embodiment of the guard according to the invention;
Figure 2 is a perspective view of the guard shown in figure 1;
Figure 3 is a detailed cross-sectional view of the guard shown in figures 1 and 2;
Figure 4 is a view corresponding to figure 1 of a second embodiment of the guard according to the invention; and
Figure 5 is a perspective view of a third embodiment of the guard according to the invention.

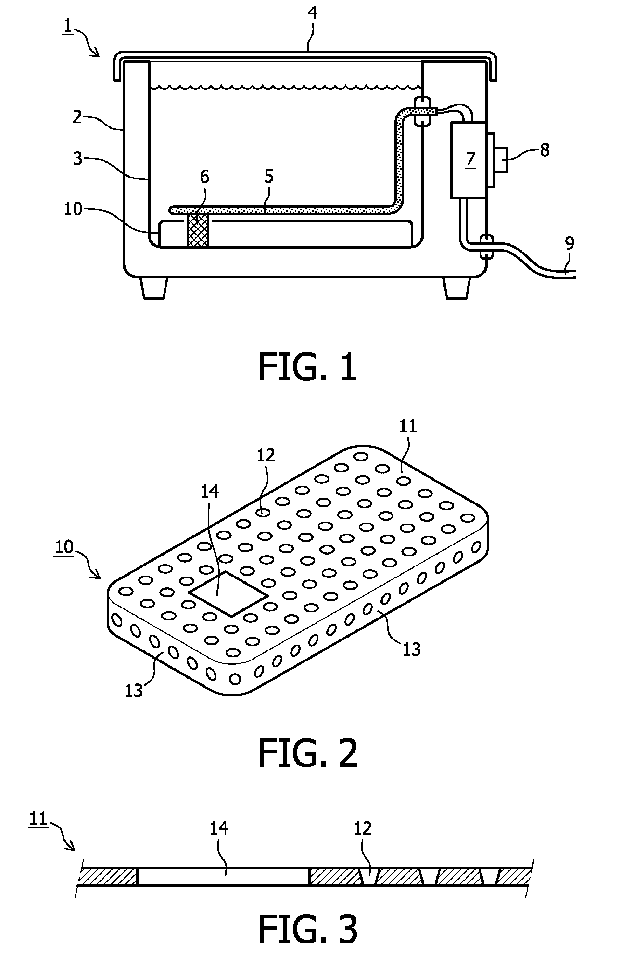

Figure 1 shows a deep fryer, designated in its entirety with 1, which is provided with a housing 2 in which a fryer vessel 3 is placed. Fryer vessel 3 is closed with a cover 4. Placed in fryer vessel 3 is an electrical heating element 5 which is fixed on one side to a wall of the fryer vessel and which on its other side rests on the bottom of fryer vessel 3 by means of a support element 6. Heating element 5 is connected to a control member 7 which is placed in housing 2 adjacently of fryer vessel 3 and provided with a control knob 8 placed outside housing 2. Control member 7 is connected to a cord 9 which extends through a wall of housing 2 and with which deep fryer 1 can be connected to mains electricity. Heating element 5 is placed some distance from the bottom of fryer vessel 3 so that a so-called cold zone is formed under the heating element. The deep fryer 1 described up to this point corresponds to the prior art.

In order to prevent the possibility of water droplets accumulating in this cold zone resulting in bubble formation and associated splashing of frying oil, a guard 10 according to a first embodiment of the invention is arranged under heating element 5 in fryer vessel 3. The construction of guard 10 will be elucidated with reference to figure 2.

Guard 10 comprises a plate 11 which is preferably manufactured from metal and provided with perforations 12. These perforations 12 are distributed regularly over the surface of plate 11. Plate 11 is also provided on its edges with bent strips 13 which are likewise provided with perforations 12. The thus formed guard 10 is adapted for placing in fryer vessel 3 of deep fryer 1, this below heating element 5 in the manner as shown in figure 1. Arranged here in plate 11 of guard 10 is an opening 14 which, when placed in fryer vessel 3, provides space for support element 6 for heating element 5. This embodiment is therefore particularly suitable for placing in already existing deep fryers of the type provided with a relevant support element 6 for supporting the distal end of heating element 5.

The nature of the perforations 12 arranged in plate 11 and in the bent strips 13 is shown clearly in figure 3, which is a cross-sectional view of the guard shown in figure 2. As shown in the figure, perforations 12 take a conical form, with their wide side to the top. In the present exemplary embodiment the perforations are arranged in rows. The mutual distance between the rows amounts to about 16 mm, and the distance between the perforations within the rows is about 13 mm. The perforations in adjacent rows are placed offset relative to each other. The diameter of the perforations on the upper side amounts to about 3 mm and on the underside to about 1.5 mm. The result hereof is that the vapour bubbles which can occur in the cold zone under guard 10 cannot pass through openings 12, or can pass through openings 12 when they are so small that there is no danger of oil splashes. It will be apparent that within the scope of the invention it is possible to vary from these dimensions. Crumbs occurring during the frying process can however enter the cold zone under the guard through the openings. Figure 3 also shows the presence of the rectangular opening 14 for passage of support element 6.

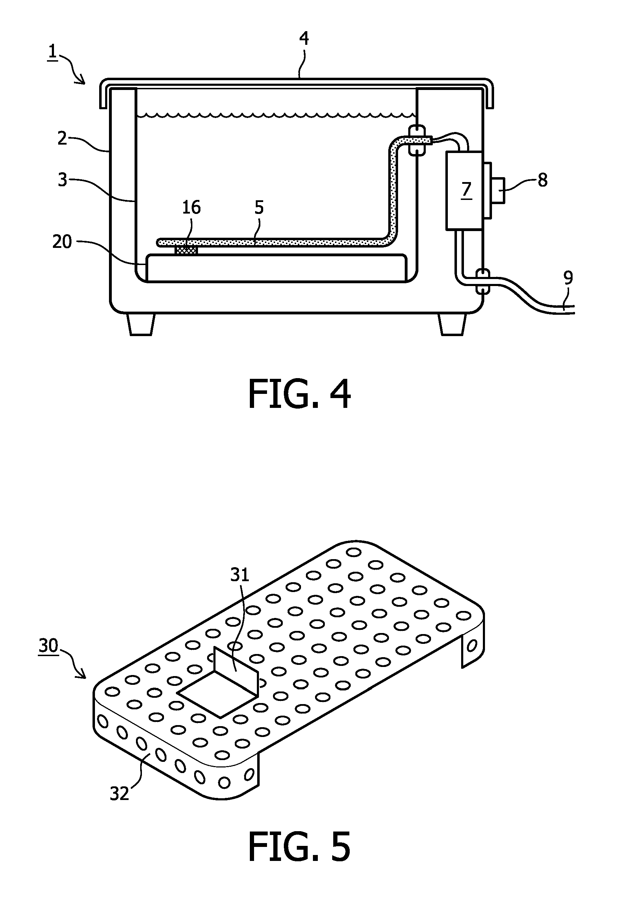

Figure 4 shows a deep fryer which substantially corresponds to the fryer shown in figure 1 but which is provided with a guard 20 which lacks the opening 14. In order to here also enable support of the distal end of heating element 5, use is made of an alternative support element 16 which is adapted to rest on guard 10. This embodiment of guard 10 and deep fryer 1 is particularly intended for the new deep fryers in which the guard is already present when they are supplied. This in contrast to the first embodiment of the guard which is suitable particularly, though not exclusively, for placing in existing deep fryers. Figure 5 shows a third embodiment of a guard according to the invention. Guard 30 is here provided with a support bracket 31 for the heating element, this support bracket being formed by a bent part of the guard. It will be apparent that other forms of support bracket can be placed on the guard. This embodiment also differs in that a bent strip 32 is present only on the end sides of guard 30.

It will be apparent that numerous variations can be made to the shown embodiments within the scope of the invention as defined by the claims. Measures of diverse embodiments can also be combined. It is thus possible to allow the guard to rest on supports arranged in the fryer vessel so that the guard can be given a substantially flat form, although it is also possible to make use of guards which are smaller than the full area of the fryer vessel and which extend only under the heating element, since it is particularly here, as a result of local heating, that there is a danger of bubble formation. It is otherwise also possible to provide the guard with legs with which it rests on the bottom of the fryer vessel.

## Claims

1. Guard which is adapted for placing in a deep fryer provided with a fryer vessel and a heating element arranged therein, wherein the guard is adapted to be placed extending substantially horizontally under the heating element in the fryer vessel, and the guard extends at least over the surface of the heating element, **characterized in that** the guard comprises a substantially flat plate provided with perforations.

2. Guard as claimed in claim 1, **characterized in that** the perforations are distributed over substantially the whole surface of the plate.

3. Guard as claimed in claim 1 or 2, **characterized in that** the perforations have a round cross section.

4. Guard as claimed in any of the preceding claims, **characterized in that** the surface area of the cross section of the perforations is larger at their upper side than at their underside.

5. Guard as claimed in claim 4, **characterized in that** the perforations take the form of a truncated cone.

6. Guard as claimed in any of the foregoing claims, **characterized in that** the guard is provided with downward extending carriers which are adapted to rest on the bottom of the fryer vessel.

7. Guard as claimed in claim 6, **characterized in that** the guard is provided on at least two sides with bent parts functioning as carriers.

8. Guard as claimed in claim 7, **characterized in that** the guard is provided with bent strips on all edges.

9. Guard as claimed in any of the foregoing claims, **characterized in that** the guard is manufactured from metal such as stainless steel or aluminium.

10. Guard as claimed in any of the foregoing claims, **characterized in that** the guard is provided with an opening, the dimensions of which in both directions are at least a factor of 10 greater than the smallest dimensions of the perforations.

11. Guard as claimed in any of the foregoing claims, **characterized in that** the guard is provided on its upper side with a bearing element for bearing the distal end of the heating element.

12. Deep fryer, provided with a fryer vessel and a heating element placed in the fryer vessel, provided with a guard extending substantially horizontally under the heating element in the fryer vessel, wherein the guard extends at least over the horizontal surface of the heating element, **characterized in that** the guard comprises a substantially flat plate provided with perforations.

13. Deep fryer as claimed in claim 12, **characterized in that** it is provided with a guard according to claim 10 and the heating element is connected on one side to the wall of the fryer vessel and on another side rests by means of a support element on the bottom of the fryer vessel, and the support element extends through the opening arranged in the guard.

14. Deep fryer as claimed in claim 12, **characterized in that** the deep fryer is provided with a guard according to any of the claims 1-9 and the heating element is connected on one side to the wall of the fryer vessel and on another side rests on the guard by means of a support element.

15. Deep fryer as claimed in claim 12, **characterized in that** it is provided with a guard according to claim 11 and the heating element is connected on one side to the wall of the fryer vessel and on another side rests on the guard by means of the support element connected to the guard.
